# EUROPEAN PATENT APPLICATION

(11) **EP 2 211 158 A1**
(43) Date of publication of application: **28.07.2010**
(21) Application number: 10160662.2
(22) Date of filing: 24.04.2009
(51) Int. Cl.: G01M 1/36, B60C 19/00

(54) **System for balancing a tire**

(30) Priority: 30.04.2008 US 111992
(62) Divisional of application: 09158735.2
(71) Applicant: The Goodyear Tire & Rubber Company, Akron, OH 44316-0001 (US)
(72) Inventor: Bormann, René Louis, L-7462, Moesdorf (LU)
(74) Representative: Kutsch, Bernd

(57) **Abstract**

The present invention is directed to a system for balancing a pneumatic tire/wheel assembly (501) and to a method of balacing a pneumatic tire using such a system. The system comprises a tire and wheel assembly (501) having a thixotropic gel (503) disposed within an interior of the tire and wheel assembly; and a machine (500) for rotating and vibrating the tire and wheel assembly (501) in a plane at least substantially parallel to an equator plane of the tire and wheel assembly, wherein the machine (500) is configured to operatively rotate the tire and wheel assembly (501) at an angular velocity that produces at least substantially a combined vibration frequency of the tire and wheel assembly and the machine.

## Description

### Field of the Invention

The present invention is directed to a system for balancing a pneumatic tire and to a method for balancing a pneumatic tire. More specifically, the present invention is directed to a system for automatically balancing a tire.

### Background of the Invention

A common problem of tires mounted to a wheel is that the tire can be or, during use, can become imbalanced. This imbalance may be caused by a plurality of different factors including uneven wear, driving style, road conditions, weight, camber, and others. The imbalance of a tire may cause improper ride quality and can eventually lead to tire blowout. Properly balancing a tire requires that the tire and wheel assembly be removed from the vehicle and a specific machine be used to determine if the tire is properly balanced on the wheel. Conventionally, if a tire is improperly balanced, a weight mechanism is attached at an attachment point between the tire and the wheel. The weight mechanism is typically a small metal attachment that is attached to the wheel assembly at a specific point to counteract the imbalance. When a sufficient amount of weight has been applied to the tire/wheel assembly, the tire/wheel assembly may be remounted on the vehicle and normal driving of the vehicle may continue.

Thus, a need therefore exists for an improved system for balancing a tire that does not require the addition of elements, such as the weight mechanism, to the tire/wheel for proper balancing of the tire.

A known conventional system utilizes a free-flowing balancing material, such as glycol and fibres, within the imbalanced tire. The material may be introduced at mounting of a tire on a rim or into an already mounted tire. The tire retains proper balance because the free-flowing material, specifically the minuscule individual elements making up the free-flowing material, inside the tire are distributed by centripetal forces generated by rotation of the wheel/tire in such a way that the free-flowing material balances a heavy spot or a heavy side of the tire assembly.

For example, a heavy spot creates a force away from the axis of rotation, but because it is anchored by the axle, an opposite force is created within the tire. This opposite force draws a sufficient quantity of the balancing material in the direction of the opposite force until the heavy spot is neutralized, or balanced about the axis of rotation. The remaining balancing material spreads itself evenly around the inside of the tire and remains in place, held by the centripetal forces which press the material against the innerliner of the tire. When the vehicle stops and the tire stops rotating, the conventional balancing material falls away from its neutralizing position on the innerliner and falls to the bottom of the tire. When the tire begins rotation again, the balancing material returns to a neutralizing position. Therefore, the process of rebalancing recommences after every stop, and a certain vibration will be felt in the vehicle before the rebalancing is completed.

Further, the constant "on the innerliner" and "off the innerliner" motion of conventional balancing material causes deterioration through this constant "on-off" motion (i.e., transformation into dust particles). This deterioration thereby causes mounting and dismounting problems for tire installers as the resulting dust deposits a coating on the wheel and the tire mounting surface. The dust may also clog the tire valve thereby possibly causing an air leak. As a result, even with a non-deteriorated balancing material, a constantly balanced tire is not produced since rebalancing must occur after every stop. During the time the material is relocating to or from the balanced positions, the tire is out of balance and vibrating. Additionally, the conventional balancing material may be abrasive in nature, causing undesirable wear of the innerliner the tire.

Conventional balancing materials may also absorb moisture, which causes clumping together of portions of the material. Thus, the clumped conventional materials tend not to move to adequate neutralizing/counterbalancing positions, or to only partially move into the optimal positions (i.e., the material cannot easily divide out or flow for proper balancing).

### Summary of the Invention

The invention relates to a sytem according to claim 1 and to a method according to claim 7.

Dependent claims refer to preferred embodiments of the invention.

In one embodiment, the pneumatic tire comprises an axis of rotation, a belt structure, an innerliner disposed radially inward of the belt structure, and two annular beads for securing the tire to a wheel. The tire includes an annular spacer structure and a thixotropic gel. The annular spacer structure is attached to the innerliner and is disposed radially inward of the belt structure. Preferably, the annular spacer structure defines two interior circumferential grooves between axially outer sides of the annular spacer structure and portions of the innerliner extending radially inward toward the corresponding beads of the tire. The thixotropic gel is disposed within the circumferential grooves thereby defining two circumferential gel rings. The gel of each circumferential gel ring automatically, upon rotation of the tire, flows until no more forces, except direct centripedal forces, act on the gel such that the tire is rotationally balanced.

In one embodiment, the annular spacer structure comprises two annular ribs attached to a radially inner surface of the innerliner.

In another embodiment, the annular spacer structure comprises two ribs having triangular cross-sections.

In another embodiment, the annular spacer structure comprises two separate ribs each having a slanted axially outer side partially defining each of the two circumferential grooves.

In another embodiment, the annular spacer structure comprises an annular spacer component disposed between the belt structure and the innerliner.

In another embodiment, the annular spacer structure has two axially opposite and tapered edge portions.

In another embodiment, the annular spacer structure comprises an annular ring component attached to a radially inner surface of the innerliner.

In another preferred embodiment, the annular spacer structure comprises an annular ring component having a rectangular cross-section. The annular ring component extends axially between the axially outer sides of the annular spacer structure.

Also described is a method for balancing a pneumatic tire with an axis of rotation. The method preferably comprises the steps of: securing an annular spacer structure adjacent an innerliner of the tire at a position radially inward of a belt structure of the tire; defining two interior circumferential grooves between axially outer sides of the annular spacer structure and portions of the innerliner extending radially inward toward corresponding beads of the tire; applying a thixotropic gel within the circumferential grooves thereby defining two circumferential gel rings; and rotating the tire such that the gel of each circumferential gel ring automatically flows until no more forces, except direct centripedal forces, act on the gel and the tire is rotationally balanced.

In one preferred aspect, the method includes the step of attaching two annular ribs to a radially inner surface of the innerliner.

In another preferred aspect, the method includes the step of providing the annular spacer structure with two separate ribs each having a slanted axially outer side partially defining each of the two circumferential grooves.

In another preferred aspect, the method includes the step of positioning an annular spacer component between the belt structure and the innerliner.

In another preferred aspect, the method includes the step of attaching an annular ring component to a radially inner surface of the innerliner.

Further described is a system for automatically balancing a pneumatic tire upon rotation of the tire about an axis of rotation. The system comprises an annular spacer structure and a thixotropic gel. Preferably, the annular spacer structure is secured to an innerliner of the tire at a position radially inward of a belt structure of the tire. The annular spacer structure defines two interior circumferential grooves between axially outer sides of the annular spacer structure and portions of an innerliner extending radially inward toward corresponding beads of the tire. The thixotropic gel is disposed within the circumferential grooves thereby defining two circumferential gel rings. The gel of each circumferential gel ring automatically flows in any direction of force until no more forces, except direct centripedal forces, act on the gel and the tire is rotationally balanced.

In one preferred aspect, the system includes an annular ring component attached to a radially inner surface of the innerliner.

In another preferred aspect, the system includes two ribs having triangular cross-sections.

In another preferred aspect, the system includes two axially opposite and tapered edge portions partially defining the circumferential grooves.

In another preferred aspect, the system includes an annular ring component having a rectangular cross-section, the annular ring component extending axially between the axially outer sides of the annular spacer structure.

The present invention is directed to a system for automatically balancing a vehicle wheel assembly upon rotation of the assembly about an axis of rotation. The assembly includes a pneumatic tire mounted on a wheel. The system includes a machine for rotating and vibrating the vehicle wheel assembly in a plane parallel or at least substantially parallel to an equator plane of the vehicle wheel assembly. The vehicle wheel assembly has a thixotropic gel disposed within an interior of the vehicle wheel assembly. The machine may be used to initiate an autobalancing mechanism provided by the thixotropic gel. Preferably, the machine measures the effect achieved by the thixotropic gel on the vehicle wheel assembly and monitors whether residual imbalance exceeds a predetermined amount prior to mounting of the vehicle wheel assembly on an automobile. Preferably, this is achieved by rotating the vehicle wheel assembly at an angular velocity that produces a combined vibration frequency (or at least substantially that vibration frequency) of the vehicle wheel assembly and hub components securing the vehicle wheel assembly to the machine.

In one preferred aspect, the system of the present invention includes the machine having a single degree of freedom within an equatorial plane of the vehicle wheel assembly for vibrating the vehicle wheel assembly.

In another preferred aspect, the system of the present invention includes the angular velocity being equal or substantially equal to the square root of spring damper rods divided by the mass of the combination of the vehicle wheel assembly and the hub components of the machine, and divided by twice π. The hub components, an "unsprung" mass, may include any components free to follow vibration excited by any imbalance. These may thereby include a hub, a part of a cardan shaft, a moving part of damper rod(s), and 50% of a spring mass. The system operates at a critical frequency (i.e., both the vibration frequency of the single degree of freedom system and the force excitation frequency created by the rotating, unbalanced vehicle wheel assembly are substantially equal) or substantially at that critical frequency.

In one preferred aspect, the system of the present invention includes the machine further having a bearing unit and a wheel centering/clamping adaptor secured to the bearing unit. The adaptor allows the mounting of the vehicle wheel assembly to the machine.

In one preferred aspect, the system of the present invention includes a plurality of spring/damper rods acting in an equatorial plane of the wheel for controlling vibrations horizontal damper rods for controlling large vibrations and a drive for rotating the adaptor.

### Definitions

The following definitions are controlling for the disclosed invention.

"Annular" means formed like a ring.

"Axial" and "axially" mean lines or directions that are parallel to the axis of rotation of the tire; synonymous with "lateral" and "laterally".

"Belt structure" means one or more annular layers or plies of parallel cords, woven or unwoven, underlying the tread, preferably unanchored to the bead.

"Circumferential" means lines or directions extending along the perimeter of the surface of the annular tire parallel to the Equatorial Plane (EP) and perpendicular to the axial direction.

"Equatorial plane (EP)" means the plane perpendicular to the tire's axis of rotation and passing through the center of its tread.

"Lateral" means an axial direction.

"Lateral edge" means the axially outermost edge of the tread as defined by a plane parallel to the equatorial plane and intersecting the outer ends of the axially outermost traction lugs at the radial height of the inner tread surface.

"Radial" and "radially" mean directions radially toward or away from the axis of rotation of the tire.

"Section height" means the radial distance from the nominal rim diameter to the outer diameter of the tire at its equatorial plane.

"Shoulder" means the upper portion of sidewall just below the tread edge. Tread shoulder or shoulder rib means that portion of the tread near the shoulder.

"Thixotropic gel" means a fluid that develops strength, or rigidity, over time when not subject to shearing or agitation.

"Tread Width" means the arc length of the tread surface in the axial direction, that is, in a plane parallel to the axis of rotation of the tire.

### Brief Description of the Drawings

The invention will be described by way of example and with reference to the accompanying drawings in which:
FIG. 1 is a schematic radial view of an example tire and tire tread for use with the present invention;
FIG. 2 is a detailed schematic cross-sectional view of a section of the example tire of FIG. 1 along with a schematic representation of one example system in accordance with the present invention;
FIG. 3 is a detailed schematic cross-sectional view of a section of the example tire of FIG. 1 along with a schematic representation of another example system in accordance with the present invention;
FIG. 4 is a detailed schematic cross-sectional view of a section of the example tire of FIG. 1 along with a schematic representation of still another example system in accordance with the present invention; and
FIG. 5 is a detailed schematic view of a machine for automatically balancing a tire in accordance with the present invention.

### Detailed Description of an Example Embodiment of the Invention

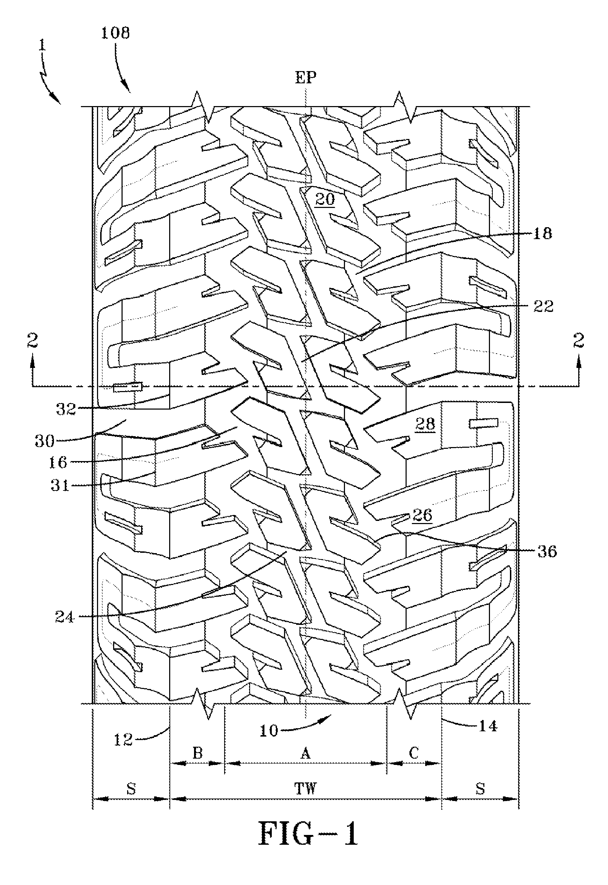

FIGS. 1-4 illustrate an example tire 1 for use with the present invention. The tire 1 has a carcass 100 that extends between, and is turned up around, a pair of opposing beads 102. The carcass 100 is also located radially outward of an innerliner 104 that extends between opposing bead toes 106. A belt structure 110 is located radially outward of the carcass 100 and radially inward of the tire tread 108. The belt structure 110 comprises multiple plies of reinforcing cords. The example tire tread 108, as illustrated, has an on-road central tread portion 10 having a tread width TW, defined by a pair of first and second lateral edges 12, 14, a section width SW and a section height SH. Axially outward of each lateral edge 12, 14 is a shoulder region S.

The central tread portion 10 is laterally divided into three tread zones, A, B, C. The central tread zone A is positioned axially between a pair of first and second circumferential grooves 16, 18. The first shoulder zone B is located between the first lateral edge 12 and the first circumferential groove 16. The second, opposite shoulder zone C is located between the second lateral edge 14 and the second circumferential groove 18. The central tread zone A has a width greater than the first and second shoulder zones B, C, while the first and second shoulder zones B, C each have the same width (FIG. 1).

The central tread zone A has a plurality of ground engaging traction elements 20 separated axially by the first and second circumferential grooves 16, 18, and a central circumferential groove 22. The plurality of ground engaging traction elements 20 are further circumferentially separated by lateral grooves 24. Each traction element 20 extends radially outwardly from a tread base 60 to an outer tread surface 62.

In each shoulder zone B, C, a plurality of ground engaging traction elements 26, 28 are separated by lateral grooves 30. The lateral grooves 30 intersect and join with the lateral grooves 24 of the central tread zone A to form an axially continuous lateral groove path across the tread width TW (FIG. 1). The traction elements 26, 28 of each shoulder zone B, C extend laterally across each shoulder zone. The traction elements 26 have a greater lateral width than the traction elements 28. The traction elements 26 extend laterally from their axially outer edges 31, coincident with the lateral edges 12, 14 of each shoulder zone B, C, axially and inwardly toward an equatorial plane EP of the tire 1. Circumferentially adjacent each longer traction element 26 is a shorter traction element 28. The shorter traction elements 28 have axially outer edges 32 spaced axially inward from the lateral edges 12, 14 of each shoulder zone B, C and the coincident axially outer edges 31 of the longer traction elements 26. The adjacent shorter traction elements 28 extend axially and inwardly toward the equatorial plane EP of the tire 1. Axially inner ends of both types of traction elements 26, 28 are axially aligned.

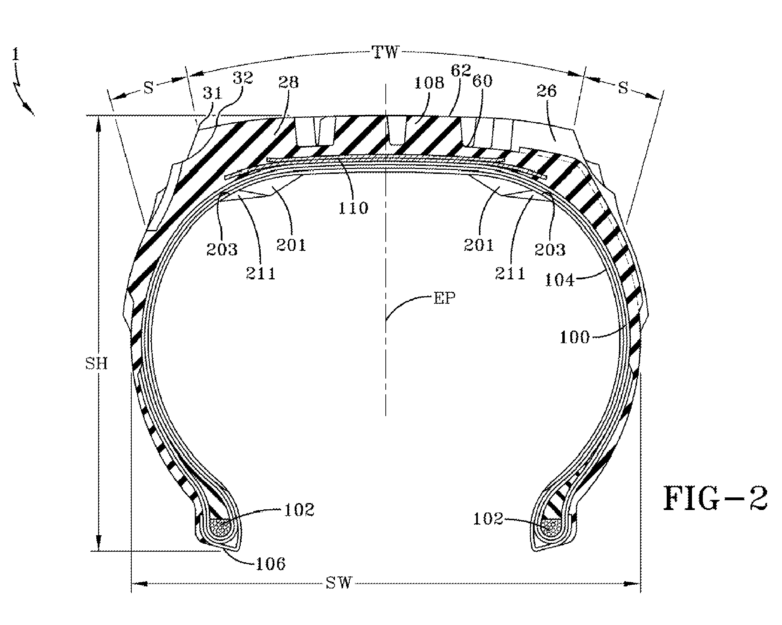

In accordance with one feature of the present invention, the example tire 1 of Figs. 1-2 further includes an autobalancing system with an annular spacer structure comprising two annular ribs 201 attached to a radially inner surface of the innerliner 104 radially inward from the belt structure 110. The annular ribs 201 may be constructed of any suitable material and attached to the innerliner 104 at any appropriate step of tire construction. The annular ribs 201 are triangular in cross-section, have one vertex pointing radially inward, and define interior circumferential grooves 203 between the slanted axially outer sides of the ribs 201 and portions of the innerliner 104 extending radially toward the corresponding beads 102 (Fig. 2). For the example tire 1, the axially outer sides of the ribs may be approximately 100 mm apart or between 80 mm and 120 mm apart. The circumferential grooves 203 are thus located generally radially inward of the shoulder regions S (Fig. 2).

The system further includes a thixotropic gel disposed within the circumferential grooves 203 thereby defining two circumferential gel rings 211. For the example tire 1, the amount of gel comprising each circumferential gel ring 211 may be approximately 60 grams. As stated in the definitions above, a thixotropic gel is a fluid that develops strength, or rigidity, over time when not subject to shearing or agitation. When the gel is initially applied to the grooves 203 of a generally stationary tire 1, the gel of the rings 211 is a very viscous fluid that will stay in place, or set. A suitable gel is described in EP-A- 0 557 365. Other suitable gels are described in EP-A- 1 196 229 and EP-A- 1 063 106.

When the tire 1 is installed on a wheel, on a vehicle, and the vehicle is initially operated, the tire 1 rotates and thus agitates the gel of each circumferential gel ring 211. The gel of each ring 211 automatically will flow in any direction of force until no more forces, except direct, or only radial, centripedal forces, act on it. The only way in which only centripedal forces act on the gel is for the entire tire/wheel assembly to be in a balanced state. Each subsequent rotation of the tire 1 will again yield an automatically balanced tire/wheel assembly.

Even unanticipated and undefinable future factors that may cause the tire/wheel assembly to become unbalanced, such as tire tread wear, minor damage to the tire/wheel, etc., are compensated by the automatic balancing created by the circumferential gel rings 211. The annular spacer structure 201 reduces the amount of thixotropic gel required for the balancing system and desirably limits gel flow, since more gel would necessarily flow more often and in greater quantities.

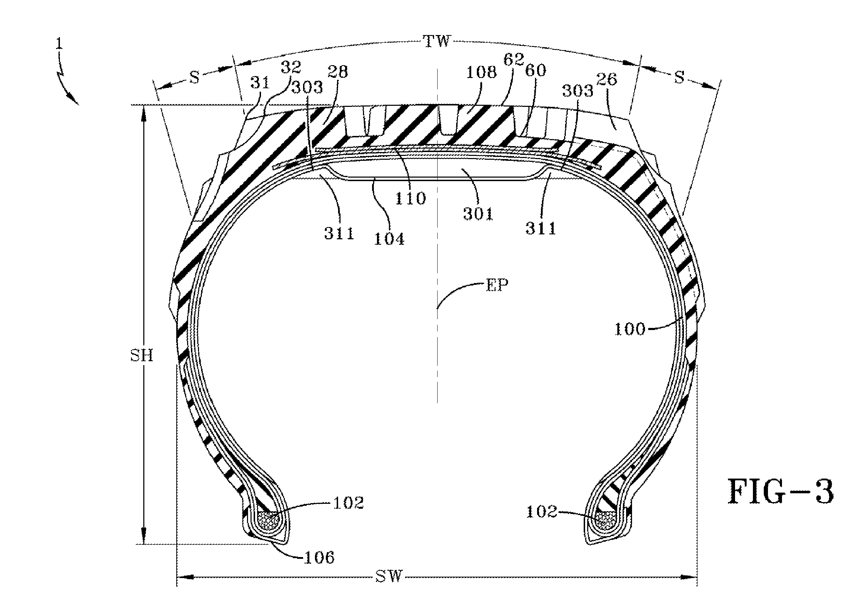

In accordance with another feature of the present invention, the example tire 1 of Figs. 1 and 3 further includes an autobalancing system with an annular spacer structure comprising an annular spacer component 301 disposed radially between the innerliner 104 and the belt structure 110. The spacer component 301 may be constructed of any suitable material and preassembled with the other structures of the tire 1 prior to curing. The spacer component 301 may have axially opposite, tapered lateral edge portions that, along with the radially protruding innerliner 104 caused by the spacer component, define interior circumferential grooves 303 between the tapered lateral edge portions/innerliner and portions of the innerliner 104 extending radially toward the corresponding beads 102 (Fig. 3). The tapered lateral edge portions reduce in thickness as the edges portions extend axially outward away from the equatorial plane EP of the tire 1. For the example tire 1, the spacer component may have an approximately 100 mm width. The circumferential grooves 303 are thus located generally radially inward of the shoulder regions S (Fig. 3).

The system further includes a thixotropic gel disposed within the circumferential grooves 303 thereby defining two circumferential gel rings 311. For the example tire 1, the amount of gel comprising each circumferential gel ring 311 may be approximately 60 grams. As stated in the definitions above, a thixotropic gel is a fluid that develops strength, or rigidity, over time when not subject to shearing or agitation. When the gel is initially applied to the grooves 303 of a generally stationary tire 1, the gel of the rings 311 is a very viscous fluid that will stay in place, or set.

When the tire 1 is installed on a wheel, on a vehicle, and the vehicle is initially operated, the tire 1 rotates and thus agitates the gel of each circumferential gel ring 311. The gel of each ring 311 automatically will flow in any direction of force until no more forces, except direct, or only radial, centripedal forces, act on it. The only way in which only centripedal forces act on the gel is for the entire tire/wheel assembly to be in a balanced state. Each subsequent rotation of the tire 1 will again yield an automatically balanced tire/wheel assembly.

Even unanticipated and undefinable future factors that may cause the tire/wheel assembly to become unbalanced, such as tire tread wear, minor damage to the tire/wheel, tire non-uniformities generated by geometric run-out or spring rate variations, etc., are partially or completely compensated by the automatic balancing created by the circumferential gel rings 311. This occurs because the first sinusoidal waveform content, the first harmonic frequency, can excite the "wheel hop" vibration mode, which may then cause the thixotropic gel to move to a different angular location within the tire and thereby reduce vibration. The annular spacer structure 301 reduces the amount of thixotropic gel required for the balancing system and desirably limits gel flow, since more gel would necessarily flow more often and in greater quantities.

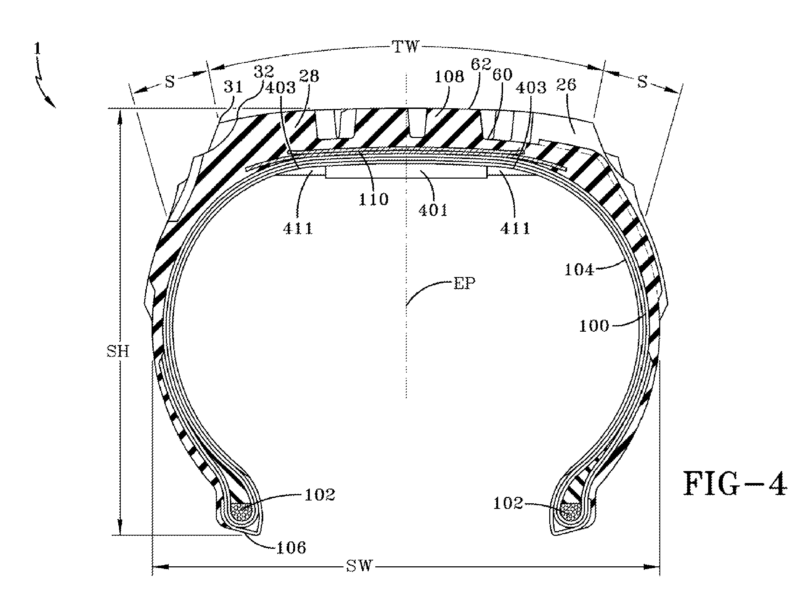

In accordance with still another feature of the present invention, the example tire 1 of Figs. 1 and 4 further includes an autobalancing system with an annular spacer structure comprising an annular ring component 401 having a rectangular cross-section and attached to a radially inner surface of the innerliner 104. The annular ring component 401 may be constructed of any suitable material, such as foam or sponge strip, and secured to the tire 1 in any suitable manner at any appropriate step of tire construction. The annular ring component 401 defines interior circumferential grooves 403 between opposite, axially outer sides of the annular ring component 401 and portions of the innerliner 104 extending radially toward the corresponding beads 102 (Fig. 4). For the example tire 1, the axially outer sides of the annular ring component 403 may be approximately 100 mm apart and the thickness of the annular ring component may be 5 mm. The circumferential grooves 403 are thus located generally radially inward of the shoulder regions S (Fig. 4).

The system further includes a thixotropic gel disposed within the circumferential grooves 403 thereby defining two circumferential gel rings 411. For the example tire 1, the amount of gel comprising each circumferential gel ring 411 may be approximately 60 grams. As stated in the definitions above, a thixotropic gel is a fluid that develops strength, or rigidity, over time when not subject to shearing or agitation. When the gel is initially applied to the grooves 403 of a generally stationary tire 1, the gel of the rings 411 is a very viscous fluid that will stay in place, or set.

When the tire 1 is installed on a wheel, on a vehicle, and the vehicle is initially operated, the tire 1 rotates and thus agitates the gel of each circumferential gel ring 411. The gel of each ring 411 automatically will flow in any direction of force until no more forces, except direct, or only radial, centripedal forces, act on it. The only way in which only centripedal forces act on the gel is for the entire tire/wheel assembly to be in a balanced state. Each subsequent rotation of the tire 1 will again yield an automatically balanced tire/wheel assembly.

Even unanticipated and undefinable future factors that may cause the tire/wheel assembly to become unbalanced, such as tire tread wear, minor damage to the tire/wheel, etc., are compensated by the automatic balancing created by the circumferential gel rings 411. The annular spacer structure 401 reduces the amount of thixotropic gel required for the balancing system and desirably limits gel flow, since more gel would necessarily flow more often and in greater quantities.

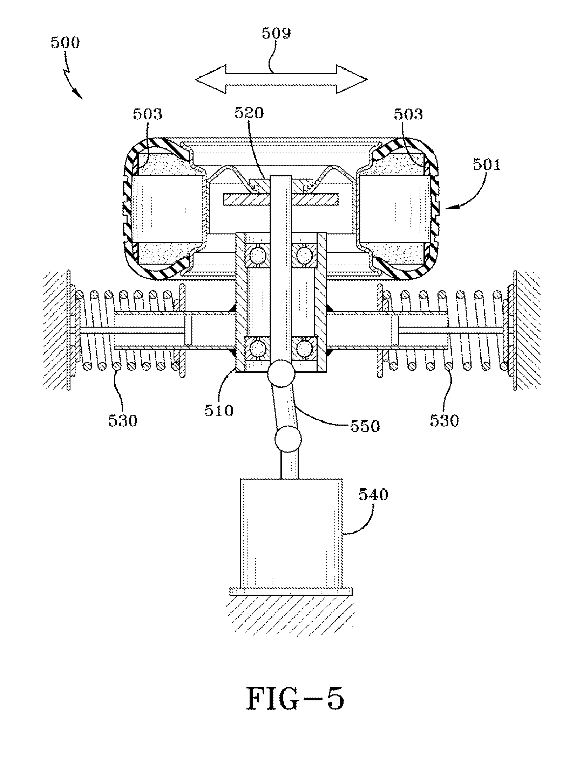

In accordance with another aspect of the present invention, FIG. 5 schematically illustrates a machine 500 for initiating the autobalancing mechanism provided by the thixotropic gel. The machine 500 may monitor and measure the effect achieved by the thixotropic gel on a tire/wheel assembly prior to mounting of the tire/wheel assembly on an automobile. The machine 500 provides for the mounting of a free spinning tire/wheel assembly. The machine 500 may have at least one degree of freedom, typically a vertical degree of freedom. The machine 500 may thereby simulate vibrations of an automobile when a "wheel hop" vibration mode is created by free rotational forces.

In FIG. 5, the machine 500 includes a bearing unit 510 and a wheel centering and clamping adaptor 520 secured to the bearing unit. The adaptor 520 allows the mounting of a tire/wheel assembly 501 to the machine 500. The machine 500 further includes a plurality of horizontal spring/damper rods 530 (two shown) for limiting/controlling large vibrations and an electrical drive 540 for rotating the adaptor 520 through a cardan shaft 550. The spring/damper rods 530 and the electrical drive may be anchored to a frame of the machine 500 or another suitable stationary location. Additional damper rods (not shown) may be added to the machine 500 for other degrees of freedom, where appropriate.

The arrow 509 illustrates a vibration introduced by an imbalance of the tire/wheel assembly 501. This imbalance may cause thixotropic gel 503 (as described above) to redistribute within the tire thereby reducing the imbalance to a negligible amount. Optimally, in order to cause a maximum vibration in the machine 500, the machine may rotate the tire/wheel assembly 501 at an angular velocity that produces a vibration frequency (or critical vibration frequency) of the machine and tire/wheel assembly combination.

This may be calculated as the square root of the spring rate of the machine/tire/wheel divided by the mass of the machine/tire/wheel, and divided by twice π. Thus, the machine 500 is operated at its critical frequency or substantially at its critical frequency with "substantially" meaning plus or minus 30%, preferably plus or minus 10%, more preferably plus or minus 5%. For a second degree of freedom, the same the angular velocity may be calculated by the same calculation as for a single degree of freedom. As explained, the calculation of this "critical" angular velocity may set a range of plus or minus 30%. A machine operating outside of this range will be relatively inefficient, since vibration displacement would be too small to transmit a significant shear force to the thixotropic gel.

As stated above, the spring/damper rods 530 prevent destruction of the machine 500. Alternatively, physically separate spring and dampers (not shown) may be utilized instead of the spring/damper rods 530.

## Claims

1. A system for automatically balancing a pneumatic tire upon rotation of the tire about an axis of rotation, the system comprising:
a tire and wheel assembly (501) having a thixotropic gel disposed within an interior of the tire and wheel assembly;
a machine (500) for rotating and vibrating the tire and wheel assembly (501) in a plane at least substantially parallel to an equator plane (EP) of the tire and wheel assembly, wherein the machine (500) is configured to operatively rotate the tire and wheel assembly (501) at an angular velocity that produces at least substantially a combined vibration frequency of the tire and wheel assembly and the machine.

2. The system of claim 1 wherein the machine (500) is configured to operatively initiate an autobalancing mechanism provided by the thixotropic gel and to operatively monitor and measure the effect achieved by the thixotropic gel on the tire and wheel assembly (501) prior to mounting of the tire and wheel assembly on an automobile.

3. The system of claim 1 or 2 wherein the angular velocity equals a system parameter W, wherein the system parameter W is the square root of a spring rate of a combination of the tire and wheel assembly and the machine divided by the mass of the combination of the tire and wheel assembly and the machine, and divided by twice π.

4. The system of claim 1 or 2 wherein the angular velocity is in a range of a system parameter W plus or minus 30 %, wherein the system parameter W is the square root of a spring rate of a combination of the tire and wheel assembly and the machine divided by the mass of the combination of the tire and wheel assembly and the machine, and divided by twice π.

5. The system of claim 4 wherein the angular velocity is in a range of the system parameter W plus or minus 10 %.

6. The system of at least one of the claims claim 1 to 5 wherein the machine (500) has a single vertical degree of freedom for vibrating the tire and wheel assembly.

7. The system of at least one of the claims 1 to 6 wherein the machine further includes a bearing unit (510) and a wheel centering and clamping adaptor (520) secured to the bearing unit (510), the adaptor allowing the mounting of the tire and wheel assembly (501) to the machine (500).

8. The system of at least one of the claims 1 to 7 wherein the machine (500) further includes a plurality of horizontal damper rods (530) for controlling large vibrations and/or a drive for rotating the adaptor (520).

9. A method for balancing a pneumatic tire with an axis of rotation, the method using a system according at least one of the previous claims.

10. The method of claim 7 comprising the steps of:
securing an annular spacer structure (201, 301, 401) adjacent an innerliner (104) of the tire (1) at a position radially inward of a belt structure (110) of the tire, the annular spacer structure (201, 301, 401) or the annular spacer structure (201, 301, 401) and the innerliner( 104) defining two circumferential grooves (203, 303, 403);
applying a thixotropic gel within the circumferential grooves (203, 303, 403) thereby defining two circumferential gel rings (211, 311, 411); and
rotating the tire (1) such that the thixotropic gel of each circumferential gel ring automatically flows until no more forces, except centripedal forces, act on the gel and the tire is rotationally balanced.
